# EUROPEAN PATENT SPECIFICATION

(11) **EP 2 326 758 B1**
(45) Date of publication and mention of the grant of the patent: **08.07.2015**
(21) Application number: 09808507.9
(22) Date of filing: 19.08.2009
(51) Int. Cl.: D06M 15/256, D06N 3/00, D06N 3/04, C03C 25/26, A47J 36/02, A47J 36/04, A47J 37/06

(54) **FLUOROPOLYMER COATED COOKING SHEET**
MIT FLUORPOLYMER BESCHICHTETES MATERIAL FÜR KOCHVORGÄNGE
MATÉRIAU DE CUISSON REVÊTU DE FLUOROPOLYMÈRE

(30) Priority: 22.08.2008 US 196956
(43) Date of publication of application: 01.06.2011
(60) Divisional application: 15168670.6
(73) Proprietor: Saint-Gobain Performance Plastics Corporation, Aurora, OH 44202 (US)
(72) Inventor: WOERNER, Graham, A., Bedford NH 03110 (US)
(74) Representative: Zimmermann & Partner Patentanwälte mbB
(86) International application number: PCT/US2009/004728
(87) International publication number: WO 2010/021708

(56) References cited:
- EP-A1- 0 164 278
- EP-A2- 0 125 955
- EP-A2- 0 218 995
- WO-A1-01/70855
- DE-A1- 2 255 911
- DE-A1- 4 137 627
- JP-A- H0 711 581
- US-A- 4 347 278
- US-A1- 2002 123 282

## Description

### FIELD OF THE DISCLOSURE

This disclosure, in general, relates to cooking sheets.

### BACKGROUND

In the restaurant industry and in particular, in quick service restaurants, businesses are turning to faster methods of cooking food in a more consistent manner. In addition, such businesses are seeking to streamline operations including cleanup operations. In a particular example, hamburgers are often cooked in a clamshell two-platen grill, which supplies heat from both the top and bottom. On typical grills, the hamburger adheres to both surfaces. Absent a non-stick surface on the top platen of the two-platen grill, the hamburger would be ripped into two pieces when the grill is opened, with a portion of the hamburger sticking to both the top and bottom platen.

Accordingly, industry has turned to non-stick surfaces on the top platen. In one example, a grill sheet is used. One conventional approach utilizes a PTFE coated foil that is clamped to the top platen. In another example, the top platen may be covered with a glass fiber reinforced PTFE sheet. However, when top grill sheets have been used on the bottom platen, such products have not performed well.

The bottom platen is often treated harshly. The cook often scrapes the bottom platen with a spatula. In addition, the bottom platen is often subjected to more vigorous cleaning. Furthermore, the bottom platen is often exposed to a large amount of grease emanating from the food products, such as hamburgers, being cooked on the grill. Currently, the quick service industry does not use a bottom platen grill sheet. EP 0 218 995 A2 relates to fluorine resin--containing waterproof cloth. DE 22 55 911 A1 relates to a process for producing fiberglass cloth coated with fluorine resins. WO 01/70855 A1 relates to a method for producing non-flammable, high-temperature resistant fibers from glass, aramide or carbon, whereby the fibers are impregnated with a PTFE dispersion. JP H07 11581 A relates to a heat-resistant releasing sheet having excellent heat- resistance and release property, free from pinhole and exhibiting high durability and abrasion resistance. US 4 347 278 A relates to coating compositions for glass fibers. DE 41 37 627 A1 relates to high temp.-resistant inert textile sheets based on multifilament textile threads which are resistant to temperatures above 300 °C, combined into yarn(s) which are then twisted together. EP 0 125 955 A2 relates to fluoropolymer composites comprising coated substrates.

### SUMMARY

In a particular embodiment, article cooking sheet includes a fabric comprising a plurality of yarns as defined in claim 1. Each yarn of the plurality of yarns includes a plurality of filaments. Each filament of the plurality of filaments includes a fluoropolymer size coat. The article also includes a fluoropolymer coating layer on the fabric.

In an exemplary embodiment, a cooking sheet includes a flat glass fabric and a fluoropolymer coating layer on the fabric. The flat glass fabric includes a plurality of yarns. Each yarn of the plurality of yarns includes a plurality of glass filaments. Each glass filament of the plurality of glass filaments includes a fluoropolymer size coat. The fluoropolymer coating layer includes a perfluoropolymer. The cooking sheet exhibits a crease tensile strength in the warp direction of at least 4.5 kg (10 lbs) and has a wicking rating of pass.

In another exemplary embodiment, a method of forming an article as defined in claim 13 includes dispensing a fabric. The fabric includes a plurality of yarns. Each yarn of the plurality of yarns includes a plurality of filaments. Each filament of the plurality of filaments has a fluoropolymer size coat. The method also includes coating the fabric with a fluoropolymer coating layer.

### BRIEF DESCRIPTION OF THE DRAWINGS

The present disclosure may be better understood, and its numerous features and advantages made apparent to those skilled in the art by referencing the accompanying drawings.
FIG. 1 and FIG. 2 include illustrations of exemplary cooking sheets.
FIG. 3 includes an illustration of an exemplary clamshell grill.

The use of the same reference symbols in different drawings indicates similar or identical items.

### DESCRIPTION OF THE DRAWINGS

In a particular embodiment, a cooking sheet includes a fabric coated with a fluoropolymer coating layer. In an example, the fabric is formed from yarns that include a plurality of filaments, such as glass filaments. Each filament of the plurality of filaments has a size coat that, for example, may include a fluoropolymer. In a particular example, each filament is pre-coated prior to incorporation into a yarn that is subsequently incorporated into the fabric. In a further embodiment, the fabric may be a flat glass fabric. Each of the yarns are formed of filaments that are not twisted together. The fabric is coated with a fluoropolymer coating layer, such as a coating layer of the perfluoropolymer. In an example, the perfluoropolymer is a polytetrafluoroethylene (PTFE), fluorinated ethylene propylene (FEP), or perfluoroalkoxy (PFA). In addition, the cooking sheet may include a topcoat formed of a fluoropolymer. In an example, the topcoat includes perfluoroalkoxy. In a particular example, the cooking sheet is incorporated into a clamshell grill.

A method of cooking a food article includes placing a ooking sheet as defined in claim 1 on a platen of a grill, heating the grill, and placing the food article on the cooking sheet. The cooking sheet includes a fabric coated with a fluoropolymer coating layer. In addition, placing the cooking sheet on the grill platen may include applying a thin layer of oil to the grill platen or the cooking sheet placing the cooking sheet on the grill platen with the thin layer of oil disposed between the cooking sheet and the grill platen.

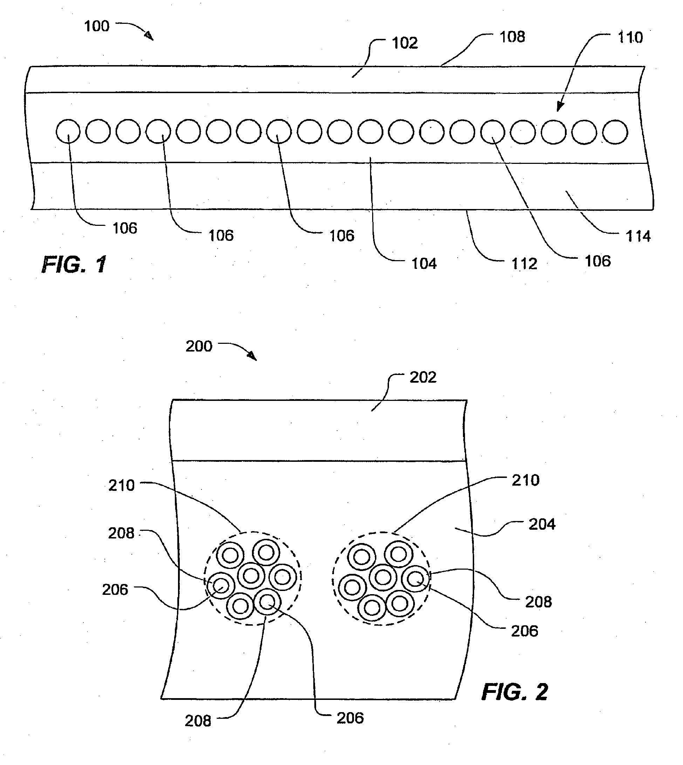

In the embodiment illustrated in FIG. 1, a cooking sheet 100 includes a fabric 110 coated with a fluoropolymer coating layer 104. Optionally, a topcoat 102 may be disposed on or overlie the fluoropolymer coating layer 104 and optionally, an undercoat 114 may be disposed under or underlie the fluoropolymer coating layer 104. As illustrated, the topcoat 102 forms a cooking surface 108. Absent the optional topcoat 102, the fluoropolymer coating layer 104 may form the cooking surface 108. In addition, the optional undercoat 114 forms a grill contact surface 112 with the grill, as illustrated. Absent the optional undercoat 114, the fluoropolymer coating layer 104 may form the grill contact surface 112.

The fabric 110 includes a plurality of yarns 106. In an example, the yarns 106 are interwoven together to form the fabric. While the yarns 106 are illustrated in FIG. 1 to be uniformly distributed, the yarns 106 may be bunched together. In a particular example, the fabric 110 is a flat glass fabric in which the yarns 106 include filaments that are incorporated into the yarns 106 without twisting and the yarns 106 are incorporated into the fabric 110 without twisting. For example, the yarns 106 may be woven into the fabric 110 without twisting. As a result, the knots, knuckles, and nodules are less prominent that those found on typical twisted yarns.

In a particular embodiment, each filament of the yarn 106 may be pretreated prior to incorporation into the yarn 106 or into the fabric 110. For example, each filament may be coated with a size coat. In a particular example, the size coat includes a fluoropolymer, such as a perfluoropolymer. In an example, the fluoropolymer is a polytetrafluoroethylene (PTFE) or a copolymer or blend thereof. In another example, the size coat includes a fluorinated ethylene propylene (FEP) copolymer or a blend thereof.

In a particular embodiment, the fabric has a weight in a range of 23.7 g/m² (0.7 osy) to 78 g/m² (2.3 osy), such as a weight of 27.1 g/m² (0.8 osy) to 50.9 g/m² (1.5 osy), or even a weight of 34 g/m² (1.0 osy) to 50.9 g/m² (1.5 osy). The fabric may have yarns in a range of 20 to 80 yarns per 2.54 cm (inch), such as 30 to 70 yarns per 2.54 cm (inch) or even 40 to 65 yarns per 2.54 (inch). Further, the fabric may have a thickness in a range between 25.4 µm (1.0 mils) and 76.2 µm (3.0 mils), such as a range of 25.4 µm (1.0 mils) to 50.8 µm (2.0 mils), or in particular, in a range of 38.1 µm (1.5 mils) to 50.8 µm (2.0 mils).

The fabric may also have an open area forming between 1% and 30% of the surface area. For example, the open area of the fabric may be in a range of 3% to 20%, such as a range of 3% to 10%. After coating with the fluoropolymer coating layer, the cooking sheet may be substantially free of openings, such as having 0% open area.

Optionally, the fabric 110 as a whole may be pretreated using a coupling agent. For example, the fabric 110 may be pretreated using a silane coupling agent.

As illustrated, the fabric 110 is incorporated within the fluoropolymer coating layer 104. Alternatively, the fluoropolymer coating layer may be positioned on either side of the fabric 110. In particular, the fabric 110 may reside or be disposed closer to the grill surface 112.

In an embodiment, the fluoropolymer coating layer 104 includes a fluoropolymer. An exemplary fluoropolymer may be formed of a homopolymer, copolymer, terpolymer, or polymer blend formed from a monomer, such as tetrafluoroethylene, hexafluoropropylene, chlorotrifluoroethylene, trifluoroethylene, vinylidene fluoride, vinyl fluoride, perfluoropropyl vinyl ether, perfluoromethyl vinyl ether, or any combination thereof. An exemplary fluoropolymer includes polytetrafluoroethylene (PTFE), a fluorinated ethylene propylene copolymer (FEP), a copolymer of tetrafluoroethylene and perfluoropropyl vinyl ether (PFA), a copolymer of tetrafluoroethylene and perfluoromethyl vinyl ether (MFA), a copolymer of ethylene and tetrafluoroethylene (ETFE), a copolymer of ethylene and chlorotrifluoroethylene (ECTFE), polychlorotrifluoroethylene (PCTFE), poly vinylidene fluoride (PVDF), a terpolymer including tetrafluoroethylene, hexafluoropropylene, and vinylidenefluoride (THV), or any blend or any alloy thereof. In an example, the fluoropolymer includes polytetrafluoroethylene (PTFE), fluorinated ethylene propylene (FEP), PFA, polyvinylidene fluoride (PVDF), or any combination thereof. In particular, the fluoropolymer may include polytetrafluoroethylene (PTFE), fluorinated ethylene propylene (FEP), PFA, or any combination thereof. In a further embodiment, the fluoropolymer may be a perfluoropolymer, such as PTFE or FEP.

In a particular example, the fluoropolymer includes a perfluoropolymer. For example, the perfluoropolymer may include polytetrafluoroethylene (PTFE), fluorinated ethylene propylene (FEP), perfluoroalkoxy polymer, or any blend or copolymer thereof. In a particular example, the fluoropolymer coating layer 104 includes polytetrafluoroethylene (PTFE).

Optionally, a top coat 102 may be formed on top of or overlie the fluoropolymer coating layer 104. In an example, the topcoat 102 includes a fluoropolymer, such as a perfluoropolymer. In a particular example, the topcoat 102 includes a thermoplastic processable fluoropolymer. For example, the topcoat 102 may include a perfluoroalkoxy (PFA) or a blend or copolymer thereof. Similarly, the undercoat 114 may be formed under or to underlie the fluoropolymer coating layer 104. In an example, the undercoat 114 includes a fluoropolymer, such as a perfluoropolymer. In a particular example, the undercoat 114 includes a thermoplastic processable fluoropolymer. For example, the undercoat 114 may include a perfluoroalkoxy (PFA) or a blend or copolymer thereof. In an example, the undercoat 114 and topcoat 102 form symmetric layers on either side of the fluoropolymer coating layer 104. Alternatively, the undercoat 114 and the topcoat 102 form asymmetric layers about the fluoropolymer coating layer 104. In a further example, the cooking film 100 may include one or the other, both or none of the topcoat 102 and the undercoat 114.

To further illustrate the nature of the fabric, FIG. 2 includes an illustration of a portion of a cooking sheet 200 that includes a fluoropolymer coating layer 204 and an optional topcoat 202. In addition, the yarns 210 of a fabric are illustrated. Each yarn 210 includes a plurality of filaments 206. Each filament 206 includes a size coat 208. In a particular example, the filaments 206 may be formed of glass, such as fiberglass. Each filament 206 is coated with a size coat 208 prior to incorporation within a yarn 210 that is incorporated within the fabric. For example, the filament 206 may be coated shortly after processing or formation. In particular, each filament 206 individually includes the size coat 208. Such a size coat 208 is contrasted with size coats of yarns as a whole in which more than one filament may be incorporated within a single size coat matrix. Accordingly, each filament 206 having an individual size coat 208 may be incorporated into a yarn 210, such as a twist free yarn that may be woven into a fabric.

Returning to FIG. 1, the cooking sheet 100 may exhibit desirable features. In particular, the cooking sheet 100 has a thickness of not greater than 81.3 µm (3.2 mils). For example, the thickness may be not greater than 76.2 µm (3.0 mils), such as not greater than 71.2 µm (2.8 mils). Further, the cooking surface 108 of the cooking sheet 100 may have a surface roughness (Ra) of not greater than 2.54 µm (100 micro inches) as measured by a Mitutoyo Surftest SJ201P. For example, the surface roughness (Ra) may be not greater than 1.78 µm (70 micro inches).

In addition, the cooking sheet 100 exhibits desirable mechanical properties. For example, the cooking sheet 100 may have a desirable tensile strength in both the warp and fill directions. In addition, the cooking sheet 100 may have a desirable trapezoidal tear strength. Moreover, the cooking sheet 100 may retain desirable mechanical properties after distress. For example, the cooking sheet 100 may exhibit a desirable crease tensile strength and crease trapezoidal tear strength. In addition, the cooking sheet 100 may exhibit a desirable MIT flex performance.

In a particular embodiment, tensile strength may be measured using ASTM D902. The cooking sheet 100 may have a tensile strength in the warp direction of at least 13.6 kg (30 lbs), such as at least 22.7 kg (50 lbs). In a further example, the tensile strength in the fill direction may be at least 20.4 kg (45 lbs), such as at least 29.5 kg (65 lbs), or even at least 31.8 kg (70 lbs).

The cooking sheet 100 may have a desirable trapezoidal tear strength as measured in accordance with ASTM D751, as modified as ASTM D4969. For example, the trapezoidal tear strength of the cooking sheet 100 may be at least 1.6 kg (3.5 lbs), such as at least 1.8 kg (4.0 lbs).

In addition, the cooking sheet 100 may exhibit desirable tensile strength and trapezoidal tear strength after distress, such as creasing. In particular, the tensile strength and trapezoidal tear strength may be measured after creasing one time with a 10 lb roller applied parallel to a fold. The tensile strength of the material after creasing with the 10 lb roller is denoted as the crease tensile strength, and the trapezoidal tear strength after creasing is denoted the crease trapezoidal tear strength. In particular, the cooking sheet 100 may have a crease tensile strength in the warp direction of at least 4.5 kg (10 lbs), such as at least 6.8 kg (15 lbs), or even at least 7.7 kg (17 lbs). Further, the cooking sheet 100 may exhibit a crease trapezoidal tear strength of at least 0.2 kg (0.5 lbs), such as at least 0.5 kg (1.0 lbs).

The durability of the cooking sheet 100 under distress may also be characterized by the MIT flex performance. For example, the cooking sheet 100 may have a MIT flex performance of at least 10,000, such as at least 15,000, at least 20,000, or even at least 25,000. The MIT flex performance is measured with repetitions at 0.9 kg (2 pounds) on a 12.7 mm (1/2 inch) wide specimen in accordance with the folding endurance test of ASTM D2176-63J.

The cooking sheet 100 may exhibit a desirable stiffness or drape. For example, the stiffness of the cooking sheet 100 may be at least 70 mm as measured by Federal Test Method 191-5206. In particular, the stiffness of the cooking sheet 100 may be at least 73 mm, such as at least 74 mm, at least 75 mm, or even at least 77 mm. In general, the stiffness is not greater than 200 mm.

Further, the cooking sheet 100 performs well when tested for cooking performance. In particular, the cooking sheet 100 is resistant to wicking of grease and charring of grease, as well as providing desirable sear on hamburgers. In an example, wicking is tested by subjecting the grill sheet to hot grease for 16 hours at 204°C (400°F), as described in the examples below. When grease wicks into the fabric or cooking sheet, it tends to char and weaken the fabric. In addition, it tends to discolor both the fabric and the individual filaments. Embodiments of the cooking sheet 100 described above exhibit little or no wicking, little or no charring of grease, and little or no discoloration of the filaments or the fabric. Thus, embodiments of the cooking sheet 100 receive a pass rating for the wicking rating. The wicking rating is determined in accordance with the method outlined in the examples below. Similarly, embodiments of the cooking sheet exhibit a pass rating on the dye penetration rating, described below in the examples.

Durability may be determined by testing the cooking sheet 100 under typical cooking conditions. In particular, durability is determined by placing the cooking sheet 100 on the primary grill at a 24-hour quick serve restaurant. Embodiments of the cooking sheet 100 exhibit durability of at least 5 days, such as at least 7 days, without substantial degradation.

In a further example, the cooking sheet 100 exhibits a dielectric strength of at least 2500 V. For example, the dielectric strength may be in a range of 2500 V to 6000 V, such as a range of 3000 V to 6000 V. In an example, a desirable dielectric strength may indicate consolidation of the fluoropolymer layers and a lack of impurities.

In addition, the cooking sheet 100 provides desirable cooking performance, providing the cooked food article, such as a hamburger, a desirable surface texture and sear. Sear rating is determined in accordance with the method described below and indicates the nature of the sear of a food article cooked on the cooking sheet 100 relative to direct cooking on a platen. For example, a sear rating of pass indicates that the sear of the food article when cooked on the cooking sheet 100 is similar to the sear when directly cooked on the platen. A failed sear rating may indicate excessive cooking or sear on the cooking sheet or not enough sear. In particular, sear may be visually determined by the relative darkness of the cooked article.

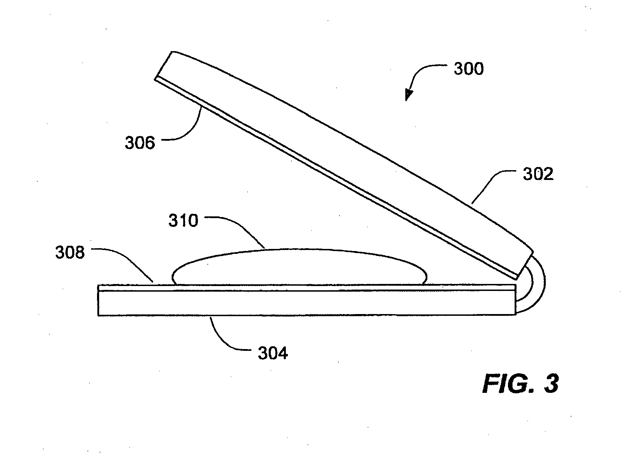

In a particular embodiment, the cooking sheets may be applied to a surface of a grill. For example, the grill may be a clamshell grill 300, as illustrated in FIG. 3. In an example, the grill includes a top platen 302 and a lower platen 304. The grill platens (302, 304) are heated. A food article 310 is disposed between the grill platens (302, 304) and the grill platens (302, 304) are closed around the food article 310 to cook it.

A cooking sheet 306 may be disposed between the food article 310 and the top grill platen 302. In particular, the cooking sheet 306 may be mechanically coupled to the top platen 302.

A cooking sheet 308 may be applied over the lower platen 304. In an example, the cooking sheet 308 may be mechanically coupled to the lower platen 304. Alternatively, the cooking sheet 308 may be adhered to the lower platen 304. For example, a thin layer of liquid high temperature tolerant oil may be applied between the lower grill platen 304 and the cooking sheet 308, effectively adhering the cooking sheet 308 to the lower grill platen 304 through surface tension.

In practice, the cooking sheets (306, 308) are applied to their respective platens (302, 304) and the platens (302, 304) are heated. A food article 310 is placed between the platens on top of the cooking sheet 308 and under the cooking sheet 306 and the platens (302, 304) are brought together to heat the respective top and bottom surfaces of the food article 310. Once cooked, the clamshell grill is opened, separating the top platen 302 from the lower platen 304. The food article is removed, leaving the grill sheets 306 and 308 in place.

Grill sheets may be formed by a method that includes dispensing a fabric, such as flat glass fiberglass fabric that includes filaments that are individually size coated. The fabric may be dip coated into a dispersion including a fluoropolymer. Excess dispersion may be metered from the fabric and the fluoropolymer dispersion may be heated to drive off solvents and consolidate the fluoropolymer. The coating process may be performed one or more times, such as at least two times, or even at least three times. Optionally, a topcoat may be applied over one or both surfaces of the coated fabric. For example, the coated fabric may be dip coated to include a different fluoropolymer. Alternatively, a fluoropolymer film may be laminated to the coated fabric or a topcoat may be extruded onto one or more surfaces of the coated fabric.

In a particular example, the cooking sheet is formed through a process of coating a carrier web or a reinforcement material (e.g., the fabric) with a low surface energy, low coefficient of friction material, such as fluorinated polymer. PTFE is one such fluorinated polymer. The carrier web or the reinforcement material are paid from a roll and coated on at least one side with a suspension including fluorinated polymer particles dispersed in a liquid medium. In one particular embodiment, the suspension includes Dupont® TE3859 PTFE aqueous dispersion to which surfactant has been added. Alternatively, the suspension may be free of surfactant.

A blade or metering rods are positioned to remove excess suspension from the carrier web. The suspension is then dried and sintered to form a layer on the carrier web. In one particular embodiment, the coated suspension is dried at 150°F to 149°C (300°F) and sintered at 288°C (550°F) to 382°C (720°F). The thickness of the layer may be increased by repeating the coating process. In one exemplary embodiment, the carrier web may be coated with the suspension, the suspension dried, and a second coating applied to the dried suspension before sintering.

An exposed surface of the fluorinated polymer is rendered bondable. For example, the surface may be chemically etched with an etching composition, such as sodium metal/naphthalene/glycol ether mixture and sodium metal/anhydrous ammonia mixture. In other exemplary embodiments, the surface is rendered bondable through electrochemical treatments, metal sputtering and deposition of metals and/or metal oxides. For example, deposition of metals and metal oxides may include chemical vapor deposition and physical vapor deposition.

In another exemplary embodiment, the surface of the fluorinated polymer is rendered bondable by impregnating the material with colloidal silica. For example, the fluorinated polymer may include 25-70 wt% colloidal silica. In a further example, the surface may be rendered bondable by applying to the surface a coating of FEP or PFA including colloidal silica. The FEP or PFA coating is dried and sintered or fused to the surface of the fluorinated polymer, such as PTFE. In one particular embodiment, the fluorinated polymer surface is coated with a mixture of DuPont FEP TE-9568, Ludox® LS 30 colloidal silica dispersion from W.R. Grace Company, and Triton® X-100 non-ionic surfactant. Alternatively, the surface may remain untreated.

Optionally, a second layer of fluoropolymer may be applied over the first layer. For example, the second layer may include a second fluoropolymer, such as PFA. Application of the second fluoropolymer may be performed using a dip coating method, similar to the method described above. Alternatively, the second layer may be applied by extruding a layer over the first layer. In another example, a second layer may be laminated to first layer, such as through heat lamination.

In exemplary embodiments, the thickness of the fluorinated polymer layer is generally 5.1- 304.8 µm (0.2-12 mils). For example, the thickness may be 5.1-101.6 µm (0.2-4 mils), such as 12.7-76.2 µm (0.5-3 mils). The second layer may have a thickness of 2.54 µm (0.1 mils) to 127 µm (5 mils), such as µm (0.1 mils) to 76.2 µm (3 mils), or even 2.54 µm (0.1 mils) to 25.4 µm (1.0 mils).

While embodiments described above have been described in relation to use on grills, the cooking sheet may also be formed into a conveyor belt, such as a continuous conveyor belt. In another embodiment, the cooking sheet may be applied as a cover on a conveyor belt or a liner of a cooking container.

Particular embodiments of the cooking sheet exhibit desirable technical advantages. In particular, the cooking sheets have an extended durability and resistance to tear. In particular, the coated sheets are resistant to creasing, wicking of grease and charring. As described below, testing has shown durability under strenuous conditions with desirable cooking performance. As such, the cooking sheets provide a durable film that maintains food quality.

### EXAMPLES

### Example 1

Samples are prepared that include a fabric coated with a PTFE and optionally coated with a topcoat. Table 1 illustrates the form, thickness, and weight of the sample.

**TABLE 1. Cooking Sheet Samples**

| | 1 | 2 | 3 | 4 | 5 | 6 |
|---|---|---|---|---|---|---|
| Style | 106 | 106 | 106 | 1280 | 1080 | 106 |
| Fluorocarbon in Size | No | No | No | Yes | Yes | No |
| Pretreatment | No | Z6011 Silane | Z6020 Silane | No | No | No |
| Coating | PTFE | PTFE | PTFE | PTFE | PTFE | PTFE |
| Topcoat | mPTFE | No | No | No | No | No |
| Thickness µm (mils) | 58.4 (2.3) | 55.9 (2.2) | 58.4 (2.3) | 71.1 (2.8) | 71.1 (2.8) | 5 8.4 (2.3) |
| Weight g/m² (osy) | 110.5 (3.26) | 100.7 (2.97) | 98.3 (2.9) | 139.0 (4.1) | 132.2 (3.9) | 94.9 (2.8) |

### MECHANICAL PROPERTIES

The samples are tested for tensile strength in accordance with ASTM D902 and are tested for trapezoidal tear strength in accordance with ASTM D751 as modified by ASTM D4969. Stiffness is measured in accordance with ASTM D4032.

In addition, samples are tested for mechanical properties after distress. Crease tensile strength and crease trapezoidal tear strength are tested after creasing with a 10 lb roller. For crease tensile strength, samples are cut 1" wide by 7" long and folded in the center. The samples are creased 1 time with the 10 lb roller parallel to the fold. Tensile strength of the creased sample is tested in accordance with ASTM D902. For the crease trapezoidal tear strength, samples are cut in accordance with the trapezoidal tear strength test method. Samples are folded so that the crease will be torn, i.e., at the end of the cut that starts the tear. The fold is creased 1 time with the 10 lb roller parallel to the fold. Trapezoidal tear strength of the creased sample is tested in accordance with ASTM D751 as modified by ASTM D4969. MIT Flex is measured in accordance with the folding endurance test of ASTM D2176-63J.

### WICKING RATING

Wicking is tested by exposing a sample to hot grease for 16 continuous hours. A backing pan is lined with a release film. Two layers of 1080 glass fabric are placed on the release film. Vacuum grease is applied to a ring for complete coverage. The ring is secured to the sample sheet using the vacuum grease to ensure that there is not point of leakage and the sample sheet is placed into the pan. Hamburger grease is added to the reservoir formed within the ring. Metal foil is placed over the ring to prevent splattering. An oven is heated to 204.4 (400°F) and the pan is placed in the oven for 16 hours. The pan and sample are removed and allowed to cool.

When cool, the ring and sheet are observed for leakage. The 1080 glass fabric is observed for the presence of grease. An absence of grease indicates a lack of wicking. Test sheets are observed under a microscope for color of the glass yarns and filaments. Discoloring indicates wicking. If no wicking is observed, the sample receives a pass rating.

### DYE PENETRATION

Dye penetration is measured by placing a drop of Met-L-Chek VP-30 on a sample on a level surface. The droplet is allowed to stand overnight and is then examined. The droplet is expected to still be in the shape of a droplet and not to have spread over the surface. If it spreads, the sample fails. The dye is absorbed with a tissue and the surface is examined with a microscope. If the dye penetrates and wicks more than 3.175 mm (1/8"), the sample fails. If there is no penetration or no wicking past 3.175 mm (1/8") the sample passes.

### SEAR RATING

Quick Service Restaurant (QSR) hamburgers are grilled on a QSR grill without a cooking sheet for 40 seconds and for 38 seconds as a control. At least two hamburgers are grilled on the QSR's grill with a cooking sheet. A sampling of people are asked to judge whether the at least two hamburgers grilled with the cooking sheet are lighter, darker, or about the same in color as the control. If the color is the same as the control, the cooking sheet is provided a pass rating.

### DURABILITY

Sample sheets are applied to a QSR grill and exposed to the 24 hour cooking conditions of an average QSR primary grill. The number of days until substantial tearing is determined as the durability. At least 5 days is required to pass and at least 7 days is preferred.

### DIELECTRIC STRENGTH

Dielectric strength of the samples is measured in accordance with ASTM D149.

**TABLE 2. Sample Properties**

| | 1 | 2 | 3 | 4 | 5 | 6 |
|---|---|---|---|---|---|---|
| Tensile Strength - Warp kg (lbs) | 15.0 (33) | 95 (21) | 14.1 (31) | 26.8 (59) | 25.9 (57) | 25.8 (57) |
| Tensile Strength - Fill kg (lbs) | 18.6 (41) | 17.7 (39) | 25.4 (56) | 34.0 (75) | 35.8 (79) | 16.3 (36) |
| Trapezoidal Tear - Warp kg (lbs) | 0.45 (1.00) | 0.38 (0.83) | 1.10 (2.43) | 2.15 (4.73) | (1.96) 4.33 | 1.00 (2.2) |
| Trapezoidal Tear - Fill kg (lbs) | 0.74 (1.63) | 0.88 (1.93) | 0.45 (1.00) | 1.83 (4.03) | 1.87 (4.13) | 0.54 (1.2) |
| Roughness, Ra µm (micro inches) | 1.7 (67) | 1.6 (63) | 1.37 (54) | 1.45 (57) | 1.63 (64) | 2.11 (83) |
| Cracking | None | None | None | None | None | None |
| Crease Tensile - W kg (lbs) | 2.50 (5.5) | 2.04 (4.5) | 1.95 (4.3) | 7.44 (16.4) | 9.03 (19.9) | 1.81 (4) |
| Crease Trap. Tear - W kg (lbs) | 0.41 (0.9) | 0.23 (0.5) | 0.0(0.0) | 0.45 (1.0) | 0.86 (1.9) | 0.0(0.0) |
| MIT Flex | 9123 | 4566 | 3598 | 25615 | 24960 | 5410 |
| Cracks after Flex | None | None | None | None | None | None |
| Air Permeation | 0 | 0 | 0 | 0 | 0 | 0 |
| Wicking Rating | Pass | Pass | Pass | Pass | Pass | Fail |
| Dye Penetration | Pass | Pass | Pass | Pass | Pass | Fail |
| Sear Rating | Pass | Darker | Darker | Pass | Pass | |
| Dielectric Strength (V) | 1679 | 3673 | 3994 | 5015 | 3025 | |
| Stiffness (mm) | 67 | 64 | 75 | 77 | 74 | 63 |

Table 2 illustrates the performance of the samples for the given test. In particular, Sample 6, which does not include size coated filaments, has poor mechanical properties after distress and wicks grease. In addition, Sample 6 does not pass the durability test. Other samples (e.g., sample 2 and 3) that include silane pretreated fabric exhibit improved wicking ratings, but perform poorly after distress. Samples 4 and 5 that include the size coated filaments pass the wicking test, sear test, and durability. In addition, Samples 4 and 5 provide desirable mechanical properties both before and after distress.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of invention.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A cooking sheet comprising:
a fabric comprising a plurality of yarns (210), each yarn (210) of the plurality of yarns comprising a plurality of filaments (206), each filament (206) of the plurality of filaments (206) comprising an individual fluoropolymer size coat (208); and
a fluoropolymer coating layer (204) on the fabric,
wherein the filaments are not twisted together.

2. The cooking sheet of claim 1, wherein the fabric is a flat glass fabric.

3. The cooking sheet of claim 1 or claim 2, wherein the each filament (206) comprises fiberglass.

4. The cooking sheet of claim 1, wherein the fluoropolymer size coat (208) comprises a perfluoropolymer.

5. The cooking sheet of any one of claims 1, 2 or 4, further comprises a silane treatment on the fabric.

6. The cooking sheet of any one of claims 1, 2 or 4, wherein the fluoropolymer coating layer (204) comprises a perfluoropolymer.

7. The cooking sheet of any one of claims 1, 2 or 4, further comprising a second fluoropolymer layer (202) overlying the first fluoropolymer coating layer (204).

8. The cooking sheet of any one of claims 1, 2 or 4, wherein the cooking sheet has a thickness of not greater than 0.08 mm (3.2 mils).

9. The cooking sheet of any one of claims 1, 2 or 4, wherein the cooking sheet has a stiffness of at least 70 mm as measured by Federal Test Method 191-5206.

10. The cooking sheet of any one of claims 1, 2 or 4, wherein the cooking sheet has a wicking rating of pass as measured by exposing a sample to hot grease for 16 continuous hours.

11. The cooking sheet of any one of claims 1, 2 or 4, wherein the cooking sheet has a dye penetration rating of pass as measured by placing a drop of Met-L-Chek VP-30 on a sample on a level surface.

12. The cooking sheet of any one of claims 1, 2 or 4, wherein the cooking sheet forms a grill sheet.

13. A method of forming a cooking sheet, the method comprising:
dispensing a fabric, the fabric comprising a plurality of yarns, each yarn of the plurality of yarns comprising a plurality of filaments, each filament of the plurality of filaments having an individual fluoropolymer size coat; and
coating the fabric with a fluoropolymer coating layer,
wherein the filaments are not twisted together.

14. The method of claim 13, further comprising coating the fluoropolymer coating layer with a top coat layer.

## Patentansprüche

1. Kochfläche, umfassend:
ein Gewebe, das mehrere Fäden (210) umfasst, wobei jeder Faden (210) der mehreren Fäden mehrere Filamente (206) umfasst, wobei jedes Filament (206) der mehreren Filamente (206) einen einzelnen Fluorpolymer-Deckbinder (208) umfasst; und
eine Fluorpolymer-Beschichtungsschicht (204) auf dem Gewebe,
wobei die Filamente nicht miteinander verdrillt sind.

2. Kochfläche nach Anspruch 1, wobei das Gewebe ein flaches Glasgewebe ist.

3. Kochfläche nach Anspruch 1 oder Anspruch 2, wobei jedes Filament (206) eine Glasfaser umfasst.

4. Kochfläche nach Anspruch 1, wobei der Fluorpolymer-Deckbinder (208) ein Perfluorpolymer umfasst.

5. Kochfläche nach einem der Ansprüche 1, 2 oder 4, ferner umfassend eine Silanbehandlung auf dem Gewebe.

6. Kochfläche nach einem der Ansprüche 1, 2 oder 4, wobei der Fluorpolymer-Deckbinder (204) ein Perfluorpolymer umfasst.

7. Kochfläche nach einem der Ansprüche 1, 2 oder 4, ferner umfassend eine zweite Fluorpolymerschicht (202), die über der ersten Fluorpolymer-Beschichtungschicht (204) liegt.

8. Kochfläche nach einem der Ansprüche 1, 2 oder 4, wobei die Kochfläche eine Dicke von nicht mehr als 0,08 mm (3,2 mil) besitzt.

9. Kochfläche nach einem der Ansprüche 1, 2 oder 4, wobei die Kochfläche eine Steifigkeit von mindestens 70 mm wie von der Federal Test Method 191-5206 gemessen besitzt.

10. Kochfläche nach einem der Ansprüche 1, 2 oder 4, wobei die Kochfläche eine hohe Durchgangs-Dochtwirkungsrate besitzt, wie durch Aussetzen der Probe mit heißem Fett für 16 Stunden durchgehend gemessen.

11. Kochfläche nach einem der Ansprüche 1, 2 oder 4, wobei die Kochfläche eine Durchgangs-Farbstoffdurchdringungsrate besitzt, die durch Anordnen eines Tropfens von Met-L Chek VP-30 auf einer Probe auf einer geraden Oberfläche gemessen wird.

12. Kochfläche nach einem der Ansprüche 1, 2 oder 4, wobei die Kochfläche eine Grillfläche bildet.

13. Verfahren zum Formen einer Kochfläche, wobei das Verfahren umfasst:
Ausgeben eines Gewebes, wobei das Gewebe mehrere Fäden aufweist, wobei jeder Faden der mehreren Fäden mehrere Filamente umfasst, wobei jedes Filament der mehreren Filamente einen einzelnen Fluorpolymer-Deckbinder besitzt; und
Beschichten des Gewebes mit einer Fluorpolymer-Beschichtungsschicht,
wobei die Filamente nicht miteinander verdrillt sind.

14. Verfahren nach Anspruch 13, ferner umfassend das Beschichten der Fluorpolymer-Beschichtungsschicht mit einer oberen Beschichtungsschicht.

## Revendications

1. Feuille de cuisson comprenant :
un tissu comprenant une pluralité de fils (210), chaque fil (210) de la pluralité
de fils comprenant une pluralité de filaments (206), chaque filament (206)
de la pluralité de filaments (206) comprenant une revêtement individuel sur mesure en fluoropolymère (208) ; et
une couche de revêtement en fluoropolymère (204) sur le tissu,
les filaments n'étant pas tressés ensemble.

2. Feuille de cuisson selon la revendication 1, dans laquelle le tissu est un tissu de verre plat.

3. Feuille de cuisson selon la revendication 1 ou la revendication 2, dans laquelle chaque filament (206) comprend des fibres de verre.

4. Feuille de cuisson selon la revendication 1, dans laquelle chaque revêtement sur mesure en fluoropolymère (208) comprend des fibres de verre.

5. Feuille de cuisson selon l'une quelconque des revendications 1, 2 ou 4, comprenant en outre un traitement au silane du tissu.

6. Feuille de cuisson selon l'une quelconque des revendications 1, 2 ou 4, dans laquelle chaque revêtement sur mesure en fluoropolymère (204) comprend un perfluoropolymère.

7. Feuille de cuisson selon l'une quelconque des revendications 1, 2 ou 4, comprenant en outre une deuxième couche en fluoropolymère (202) superposée à la première couche en fluoropolymère (204).

8. Feuille de cuisson selon l'une quelconque des revendications 1, 2 ou 4, dans laquelle la feuille de cuisson à une épaisseur ne dépassant pas 0,08 mm (3,2 mils).

9. Feuille de cuisson selon l'une quelconque des revendications 1, 2 ou 4, dans laquelle la feuille de cuisson à une raideur d'au moins 70 mm telle que mesurée par la Méthode de test fédérale 191-5206.

10. Feuille de cuisson selon l'une quelconque des revendications 1, 2 ou 4, dans laquelle la feuille de cuisson à un indice d'anti-adhésivité tel que mesuré par l'exposition d'un échantillon pendant 16 heures en continu.

11. Feuille de cuisson selon l'une quelconque des revendications 1, 2 ou 4, dans laquelle la feuille de cuisson à un indice de colorant tel que mesuré par l'exposition d'une goutte de Met-L-Chek VP-30 sur un échantillon sur une surface plate.

12. Feuille de cuisson selon l'une quelconque des revendications 1, 2 ou 4, dans laquelle la feuille de cuisson forme une feuille-grille.

13. Méthode d'obtention d'une feuille de cuisson, la méthode comprenant : la préparation d'un tissu, le tissu comprenant une pluralité de fils, chaque fil de
la pluralité de fils comprenant une pluralité de filaments, chaque filament de la pluralité de filaments ayant un revêtement individuel sur mesure en fluoropolymère ; et
le revêtement du tissu par une couche de revêtement en fluoropolymère,
les filaments n'étant pas tressés ensemble.

14. Méthode selon la revendication 13, comprenant en outre le revêtement de la couche de revêtement en fluoropolymère par une dernière couche de revêtement.
